(19) Europäisches Patentamt
European Patent Office
Office européen des brevets

(11) EP 0 806 330 A2

(12) EUROPÄISCHE PATENTANMELDUNG

(43) Veröffentlichungstag:
12.11.1997 Patentblatt 1997/46

(51) Int. Cl.⁶: **B60S 1/34**

(21) Anmeldenummer: 97106847.3

(22) Anmeldetag: 24.04.1997

(84) Benannte Vertragsstaaten:
DE FR GB IT

(30) Priorität: 09.05.1996 DE 19618738
18.06.1996 DE 19624297
06.03.1997 DE 19709093

(71) Anmelder:
Bayerische Motoren Werke Aktiengesellschaft
80788 München (DE)

(72) Erfinder:
• Wolf, Peter
83052 Götting (DE)
• Güntzel, Detlef
85586 Poing (DE)
• Gaisreiter, Johann
82444 Schlehdorf (DE)
• Lechner, Matthias, Dr.
80935 München (DE)

(54) **Wischvorrichtung für die Scheibe eines Fahrzeugs**

(57) Eine Wischvorrichtung (1) für die Windschutzscheibe (3) eines Kraftfahrzeuges weist einen Scheibenwischer (2) auf, der eine pendelnde Bewegung (6a, 6b) entlang der Scheibe (3) ausführt. Das Befestigungsteil (8) für den Wischarm (9) des Scheibenwischers (2) ist über eine Kippachse (13) derart an der Wischerantriebswelle (7) angeordnet, daß der Wischarm (9) eine begrenzte Kippbewegung (17) ausführen kann. Hierdurch wird das Wischblatt (10) des Wischarmes (9) in den Umkehrpunkten des Wischarms (9) so gegenüber der Scheibe (3) verstellt, daß es sowohl bei der Aufwärtsbewegung (6a) als auch der Abwärtsbewegung (6b) des Wischarms (9) jeweils in geschleppter Stellung über die Scheibe (3) gezogen wird. Die Überführung in die jeweils andere Kipplage wird erfindungsgemäß durch eine Steuereinrichtung (14) bewerkstelligt, die aus ortsfesten Anschlägen (15a, b) und einem mit dem Befestigungsteil (8) mitbewegten Anschlagnocken (16) besteht. Hierdurch wird unabhängig von der Reibung zwischen dem Wischblatt (10) und der Scheibe (4) ein sicheres Kippen des Wischarmes (9) erreicht.

Fig. 1

**Beschreibung**

Die Erfindung betrifft eine Wischvorrichtung für eine Scheibe eines Fahrzeugs nach dem Oberbegriff des Anspruchs 1.

Aus der DE 41 05 543 C2 ist eine derartige Wischvorrichtung mit einem pendelnd über eine Fahrzeugscheibe bewegten Wischarm bekannt. Das Wischblatt ist so am Wischarm gelagert, daß es eine begrenzte Kippbewegung um die Längsachse des Wischarmes ausführen kann. Hierdurch wird erreicht, daß in den Umkehrpunkten der Wischarmbewegung das Wischblatt in seine jeweils entgegengesetzte Kipplage umgelegt wird. Auf diese Weise befindet sich die Wischlippe des Wischblattes für beide Bewegungsrichtungen des Wischarmes jeweils in einer geschleppten Stellung, d. h. die Wischlippe wird über die Scheibe gezogen und nicht geschoben. Hierdurch wird ein Rubbeln der Wischlippe über die Scheibe, wie es im Schiebebetrieb der Wischlippe auftreten kann, vermieden. Somit wird auch die Geräuschentwicklung der Wischvorrichtung und die verschleißfördernde Walkarbeit im Wischblatt herabgesetzt. Durch die gleichmäßige geschleppte Bewegung der Wischlippe über die Scheibe wird einer Schlierenbildung während des Wischvorgangs wirksam entgegengewirkt.

Nachteilig bei der bekannten Wischvorrichtung ist, daß das Kippen des Wischblattes in den Endlagen der Wischarmbewegung über die Reibung zwischen der Wischlippe und der Scheibe ausgelöst wird. Daher ist ein gewisser Mindestwert für den Reibbeiwert zwischen Wischlippe und Scheibe erforderlich, um den Kippvorgang sicherzustellen. Obwohl die bekannte Kipplagerung leichtgängig ausgebildet ist, kann nicht ausgeschlossen werden, daß bei geringen Reibbeiwerten das Umlegen des Wischblattes in seine jeweils andere Kipplage unterbleibt.

Aufgabe der Erfindung ist es, die bekannte Wischvorrichtung so weiterzubilden, daß die Wischlippe des Wischblattes für die beiden Bewegungsrichtungen des Wischarmes jeweils zuverlässig in ihre geschleppte Position gebracht wird.

Diese Aufgabe wird durch die Merkmale des Anspruchs 1 gelöst. Kerngedanke ist es hierbei, eine Einrichtung vorzusehen, die bei Erreichen eines Umkehrpunktes der Wischarmbewegung einen gezielten Anstoß auf die Kipplagerung des Wischblattes ausübt, um das Wischblatt zwangsweise in die jeweils entgegengesetzte Richtung zu kippen. Durch die Steuereinrichtung wird das Kippen in jedem Fall und unabhängig von den vorliegenden Reibbeiwerten zwischen Wischlippe und Scheibe eingeleitet, mit den oben beschriebenen Vorteilen hinsichtlich der Geräuschentwicklung, des Reinigungsergebnisses und des Wischblattverschleißes. Die Steuereinrichtung kann beispielsweise die aus der Pendelbewegung des Wischarmes zur Verfügung stehende Bewegungsenergie nutzen oder fremdkraftunterstützt arbeiten.

Das Wischblatt kann, wie dies bei der eingangs angeführten DE-C2 der Fall ist, selbst kippbar gelagert sein. Häufig ist es jedoch vorteilhaft, den gesamten Wischarm, der beispielsweise mehrere Wischblätter trägt, kippbar zu lagern. Die Möglichkeit einer Kipplagerung des gesamten Wischarmes ist im Zusammenhang mit der vorliegenden Erfindung auch in den Fällen mit eingeschlossen, in denen nur die Kipplagerung des Wischblattes ausdrücklich erwähnt ist.

Die Ausführungsform der Erfindung nach Anspruch 2 verwendet mechanische Anschläge. In den Endlagen der Wischarmbewegung wird die Kipplagerung des Wischblattes durch einen Anschlag angestoßen und somit in ihre jeweils andere Kipplage überführt. Der Vorteil dieser Lösung liegt in ihrem robusten Aufbau, der geringen Anzahl zusätzlich benötigter Bauteile, der sicheren Funktion, dem Verzicht auf Fremdenergie und dem geringen Platzbedarf.

Die Anschläge für den Nocken können beispielsweise von Anschlagstiften, Anschlagplatten oder dergleichen (Anspruch 3) oder einer kulissenförmigen Führungsbahn (Anspruch 4) für den Nocken gebildet werden. Die Ansprüche 5 und 6 beschreiben ein Ausführungsbeispiel, bei dem der Nocken mit einer Laufrolle versehen ist, die entlang einer Laufbahn abrollt, deren Enden rampenförmige Erhöhungen aufweisen, die die Kippbewegung des Wischblattes einleiten.

Abweichend von der bekannten Wischvorrichtung der DE-C2 beschreibt das Ausführungsbeispiel gemäß Anspruch 7 eine Wischvorrichtung, bei der nicht das Wischblatt selbst, sondern der gesamte Wischarm gegenüber der Wischerantriebswelle kippbar gelagert ist. Bevorzugt ist zwischen Wischerantriebswelle und Wischarm ein Befestigungsteil vorgesehen, an dem der Wischarm so angelenkt ist, daß er von der Scheibe weg verschwenkt werden kann. Erfindungsgemäß ist zwischen der Wischerantriebswelle und dem Befestigungsteil ein Koppelteil vorgesehen, das die Kippbewegung des Wischarmes ermöglicht. Das Koppelteil ist hierbei fest mit der Wischerantriebswelle verbunden und ermöglicht im Zusammenspiel mit dem Befestigungsteil die begrenzte Kippbeweglichkeit des Wischarmes.

Die Ansprüche 8 und 9 geben Beispiele für die Ausbildung der Lagereinrichtung. Die Lagereinrichtung kann beispielsweise in Form von Lagerzapfen am Koppelteil (Anspruch 8) oder in Form einer Öffnung im Koppelteil, durch die ein Drehbolzen durchgesteckt ist (Anspruch 9), ausgebildet werden.

Auf das drehfest mit der Wischerantriebswelle verbundene Koppelteil wird gemäß Anspruch 10 der Endabschnitt des Wischarmes bzw. das Befestigungsteil aufgesetzt. Somit werden Lagereinrichtung und Wischerantriebswelle vom Wischarm bzw. Befestigungsteil verdeckt. Zur Aufnahme des Koppelteils ist der Wischarm bzw. das Befestignugsteil an seiner Unterseite mit einer topfförmigen Aussparung versehen, die in Größe und Form auf das Koppelteil abgestimmt ist.

Gemäß Anspruch 11 wird eine Begrenzung der Kippbewegung des Wischarms dadurch erzielt, daß die Außenkontur des Koppelteils und die Innenkontur der Aussparung bei Erreichen des maximalen Kippwinkels gegenseitig zur Anlage kommen. So können beispielsweise konzentrische zylindrische Formen von Aussparung und Koppelteil mit unterschiedlichen Durchmessern die Kippbewegung in einfacher Weise begrenzen.

Bei der erfindungsgemäßen Wischvorrichtung wird das Wischblatt nach dem Impuls durch die Steuereinrichtung gezielt in eine der beiden vorgegebenen Kipplagen überführt. Um diese definierte Kipplage während der Wischbewegung des Wischarmes aufrechtzuerhalten, auch unter ungünstigen Bedingungen, ist gemäß Anspruch 12 eine Stabilisierungseinrichtung vorgesehen, die eine Vorspannung auf die Kipplagerung ausübt. Somit wird während der Wischbewegung des Wischarmes ein unerwünschtes Überführen in einen undefinierten Zustand oder in die andere Kipplage vermieden. Die Stabilisierungseinrichtung kann beispielsweise von einer "Knackfrosch"-Feder mit zwei Übertotpunktlagen gebildet werden (Anspruch 13).

Gemäß Anspruch 14 wird eine Kippbewegung des Wischblattes (oder des gesamten Wischarmes) auch bei solchen Wischvorrichtungen ermöglicht, die mit einem System zur fahrtgeschwindigkeitsabhängigen Erhöhung der Andruckkraft des Wischarmes ausgestattet sind. Durch eine Erhöhung der Andruckkraft bei höheren Fahrtgeschwindigkeiten kann das Reinigungsergebnis weiter verbessert werden. Einem Rubbeln der Wischlippe wird zuverlässig entgegengewirkt, da trotz des entgegenwirkenden Fahrtwindes eine ausreichende Andruckkraft erreicht wird.

Anspruch 15 beschreibt eine bevorzugte Ausführungsform, bei der an einem drehfest mit der Wischerantriebswelle verbundenen Element eine Schwenklagerung für den Wischarm vorgesehen ist. Durch die Schwenklagerung entsteht ein zweiarmiger Hebel, auf dessen wischerarmabgewandtem Hebelarm ein durch die Wischerantriebswelle durchgeführter Stößel durch entsprechende Verlagerung eine höhere Anpreßkraft auf den Wischarm ausübt. Dieses erfindungsgemäße System ist besonders einfach im Aufbau und sicher in der Funktion.

Der Wischarm bekannter Wischvorrichtungen überstreicht im Rahmen seiner Pendelbewegung einen vorgegebenen, begrenzten Winkelbereich ("normales Wischfeld"). Durch eine Einrichtung gemäß Anspruch 16 kann der Winkel für die Wischbewegung bei Bedarf vergrößert werden, z. B. um eine versenkte Parkstellung für den Scheibenwischer unterhalb der Kante der Frontklappe anfahren zu können. Diese Parkstellung wird nur bei Abschalten der Wischvorrichtung benötigt. Sie bietet Vorteile in aerodynamischer Hinsicht und ermöglicht eine Verbesserung des Unfallschutzes im Fall von Kollisionen mit Fußgängern. Ein weiteres Anwendungsfeld einer derartigen Einrichtung ist auch eine bedarfsweise Vergrößerung des Wischfeldes ("erweitertes Wischfeld").

Durch einen Antriebsmotor, der anstelle einer umlaufenden Bewegung eine hinund hergehende Bewegung mit begrenztem Winkelausschlag erzeugt, kann das Wischfeld individuell verändert bzw. eine Parkstellung angefahren werden (Anspruch 17). Ein derartiger "reversierbarer Antrieb" oder "Umsteuermotor" bietet Vorteile hinsichtlich des Platzbedarfes, da gegenüber einem Motor mit umlaufender Drehachse nur ein begrenzter Kreissektor für die bewegten Elemente zur Verfügung stehen muß. Ein weiterer Vorteil liegt in der Möglichkeit des gesteuerten Anfahrens und Abbremsens des Wischarmes in den Umkehrpunkten des Wischfeldes und die dadurch mögliche Reduzierung des Umlegegeräusches für den Wischarm. Die Bauteile werden durch die geringeren Massenkräfte weniger stark belastet, wodurch sich ein geringerer Verschleiß an der gesamten Wischvorrichtung ergibt.

Da die Anschläge an den Umkehrpunkten des normalen Wischfeldes des Scheibenwischers angeordnet sind, ist zumindest einer der Anschläge beim Anfahren der Parkstellung oder im Fall einer Wischfeldvergrößerung hinderlich. Gemäß Anspruch 18 wird wenigstens einer der Anschläge verschieblich ausgeführt, so daß er durch die Antriebseinheit kraftgesteuert verschoben werden kann. Anspruch 19 beschreibt hierzu eine mögliche Ausführungsform mit gegeneinander verschieblichen, federbelasteten Scheiben.

Neben Wischarmen, die drehfest mit der Wischerantriebswelle verbunden sind, sind auch Wischarme bekannt, die über ein Viergelenkgetriebe bewegt werden. Hierdurch kann das Wischfeld in Form und Größe verändert werden. Erfindungsgemäß ist nach Anspruch 20 auch hier eine Kipp- und Steuereinrichtung vorgesehen, um in Verbindungen mit einem vergrößerten Wischfeld auch ein möglichst gutes Reinigungsergebnis bei geringer Geräuschentwicklung und minimalem Verschleiß zu erzielen. Das Kippen wird gemäß Anspruch 21 hierbei über Kugelgelenke ermöglicht. Die Steuereinrichtung ist dabei vorteilhafterweise einem der Kugelgelenke zugeordnet (Anspruch 22), wodurch sich eine nur geringfügige Erhöhung der Bauhöhe für die Wischvorrichtung ergibt. Beispielsweise kann die Steuereinrichtung mit karosseriefest angeordneten Anschlägen und einem mitbewegten Anschlagnocken ausgeführt werden (Anspruch 23). Anspruch 24 beschreibt den gleichwirkenden Ersatz eines Kugelgelenkes durch zwei Drehgelenke mit zueinander senkrecht angeordneten Drehachsen.

Neben einer Ausführung des Befestigungsteils als einstückiges Gußbauteil, das direkt mit dem Koppelteil zusammenwirkt, wird gemäß Anspruch 25 vorgeschlagen, das Befestigungsteil als Blechbauteil auszuführen und ein separates Lagerteil vorzusehen, das mit dem Befestigungsteil starr verbunden ist. Durch die Ausführung des Befestigungsteils beispielsweise in Stahlblech kann eine gleichmäßig geringe Bauhöhe des Befestigungsteils entlang seiner Längserstreckung erreicht werden. Damit kann die erfindungsgemäße Wischvorrichtung auch bei Fahrzeugen mit einem nur sehr kleinen Spalt zwischen der Frontklappe und der Windschutzscheibe eingesetzt werden. Ermöglicht wird die geringe Bauhöhe des erfindungsgemäßen Befestigungsteils durch die höhere Dauerfestigkeit gegenüber der Ausführung als Gußbauteil.

Bei einer Steuerung der Kippbewegung über eine Laufbahn mit rampenförmigen Erhöhungen ist durch die Fortsetzung der Laufbahn gemäß Anspruch 26 ein "Überfahren" des Anschlages möglich. Mit der Erfindung wird eine absolute Weg- oder Winkelbegrenzung im Sinn eines festen Anschlags vermieden: Die Rampen leiten auf eine Laufbahn mit einem „erhöhten Niveau" über und steuern dabei gezielt die Kippbewegung des Wischarmes ein. Hiermit kann, wie unter Anspruch 16 beschrieben, der Winkel für die Wischbewegung bei Bedarf vergrößert werden.

Anspruch 27 beschreibt eine Ausführung mit zwei voneinander unabhängigen Laufrollen, so daß die rampenförmigen Erhöhungen freier angeordnet werden können als dies bei einer Ausführung mit nur einer Laufrolle der Fall ist.

Anspruch 28 schützt eine kulissenförmige Steuereinrichtung, die als Fenster oder als randoffene Aussparung in einem Kulissenelement ausgebildet ist. Die Anschläge in der Kulisse können in einfacher Weise von den Begrenzungen des Fensters bzw. der Aussparung gebildet werden. Bevorzugt sind die Anschläge rampenförmig gestaltet.

Durch die rampenförmige Gestaltung der Anschläge auf einer Laufbahn (Anspruch 26), in einer Kulisse (Anspruch 28) oder dergleichen wird mit dem Auflaufen des Nockens oder der Rolle entlang einer schiefen Ebene ein weiches, ruckfreies Einsteuern der Kippbewegung erreicht. Hierdurch können die mit der Einleitung der Kippbewegung verbundenen Geräusche gegenüber stufenförmigen Anschlägen (z. B. einem Stift oder einem rechteckförmigen Fenster in einer Kulisse) deutlich reduziert werden. Außerdem ergibt sich eine höhere Funktionssicherheit bei gleichzeitig geringerem Verschleiß.

Wird die Kulisse gemäß Anspruch 29 ausgeführt, so ist anlog der Wischvorrichtung nach Anspruch 26 eine Erweiterung des Wischfeldes bzw. das Anfahren einer Parkstellung möglich.

Durch die Ausführung des Koppelteils als Blechbauteil (Anspruch 30) kann eine deutliche Kostenreduzierung gegenüber einer Ausführung als Gußbauteil erreicht werden, da das Koppelteil durch einfache Tiefzieh- und/oder Biegevorgänge hergestellt werden kann. Außerdem können Anbauelemente in einfacher Weise über alle bekannten Techniken zur Verbindung von Blechbauteilen am Koppelteil angeordnet werden.

Wird das Befestigungsteil als Blechbauteil ausgeführt (siehe Anspruch 25), so kann gemäß Anspruch 31 in einfacher Weise ein weiteres Blechbauteil in Form einer Blechlasche am Befestigungsteil angebracht werden, beispielsweise über eine Punktschweißverbindung. Zur Reduzierung der Geräuschentwicklung und des Verschleißes der von der Blechlasche gebildete Anschlag mit einem dämpfenden Material ummantelt.

So kann beispielsweise ein Kunststoffmaterial durch Umspritzen auf die Blechlasche aufgetragen werden. Alternativ besteht die Möglichkeit, ein Dämpfungsmaterial auf die Blechlasche aufzuvulkanisieren.

Bei Befestigungsteilen in Blechbauweise können darüber hinaus Lagersitze für die Aufnahme des Drehbolzens in Form von kostengünstig herstellbaren Durchzügen im Blechbauteil realisiert werden (Anspruch 32).

Mögliche Ausführungsbeispiele der Erfindung sind nachfolgend anhand der Zeichnung näher dargestellt und beschrieben. Es zeigt:

| | |
|---|---|
| Figur 1 | eine perspektivische Ansicht auf ein erstes Ausführungsbeispiel einer erfindungsgemäßen Wischvorrichtung für ein Kraftfahrzeug, |
| Figur 2 | eine schematische Schnittdarstellung entlang der Schnittverlaufslinie A-A in Figur 1, |
| Figur 3 | eine Explosionsdarstellung eines zweiten Ausführungsbeispiels, |
| Figuren 4, 5 und 6 | perspektivische Ansichten und Seitenansichten der zusammengesetzten Wischvorrichtung gemäß Figur 3 in verschiedenen Kipplagen, |
| Figur 7 | eine Variante des zweiten Ausführungsbeispiels im Schnitt, |
| Figur 8 | eine Schnittdarstellung gemäß der Schnittverlaufslinie B-B in Figur 7, |
| Figur 9 | eine Schnittdarstellung entlang der Schnittverlaufslinie C-C in Figur 7, |
| Figur 10 | ein drittes Ausführungsbeispiel einer erfindungsgemäßen Wischvorrichtung im Längsschnitt, |
| Figur 11 | eine Schnittdarstellung gemäß der Schnittverlaufslinie D-D in Figur 10, |
| Figur 12 | ein Ausführungsbeispiel einer Wischvorrichtung mit einer Einrichtung zur Verstellung der Andruckkraft des Wischarms im Querschnitt, |
| Figur 13 | ein Ausführungsbeispiel einer Wischvorrichtung, die von einer Antriebseinheit mit veränderbarem Drehwinkel angetrieben wird, |

in teilweise geschnittener Darstellung,

| | |
|---|---|
| Figur 14 | eine Schnittdarstellung entlang der Schnittverlaufslinie A-A in Figur 13, |
| Figur 15 | ein erstes Ausführungsbeispiel einer Wischvorrichtung mit einer Viergelenkanordnung im Schnitt, |
| Figur 16 | eine Schnittdarstellung entlang der Schnittverlaufslinie B-B in Figur 15, |
| Figur 17 | eine Draufsicht auf eine Variante des Ausführungsbeispiels von Figur 15, |
| Figur 18 | die Einzelheit X aus Figur 17 im Quer- und Längsschnitt, |
| Figur 19 | die Einzelheit Y aus Figur 17 im Schnitt, |
| Figuren 20 und 21 | ein zweites Ausführungsbeispiel einer Wischvorrichtung mit einer Viergelenkanordnung (in den beiden Umkehrlagen dargestellt), |
| Figur 22 | ein Ausführungsbeispiel einer Wischvorrichtung mit einem Befestigungsteil aus Stahlblech im Schnitt, |
| Figur 23 | ein Ausführungsbeispiel der Erfindung mit einer Steuereinrichtung in Form einer kreisbogenförmigen Laufbahn, in Explosionsdarstellung, |
| Figur 24 | ein Ausführungsbeispiel mit einer Kulissensteuerung in einer der Figur 23 entsprechenden Darstellung, |
| Figur 25 | ein Befestigungsteil und ein Koppelteil in Blechbauweise, in perspektivischer Darstellung, |
| Figur 26 | eine Unteransicht des Gegenstands von Figur 25 und |
| Figur 27 | ein weiteres Ausführungsbeispiel des Gegenstands von Figur 25. |

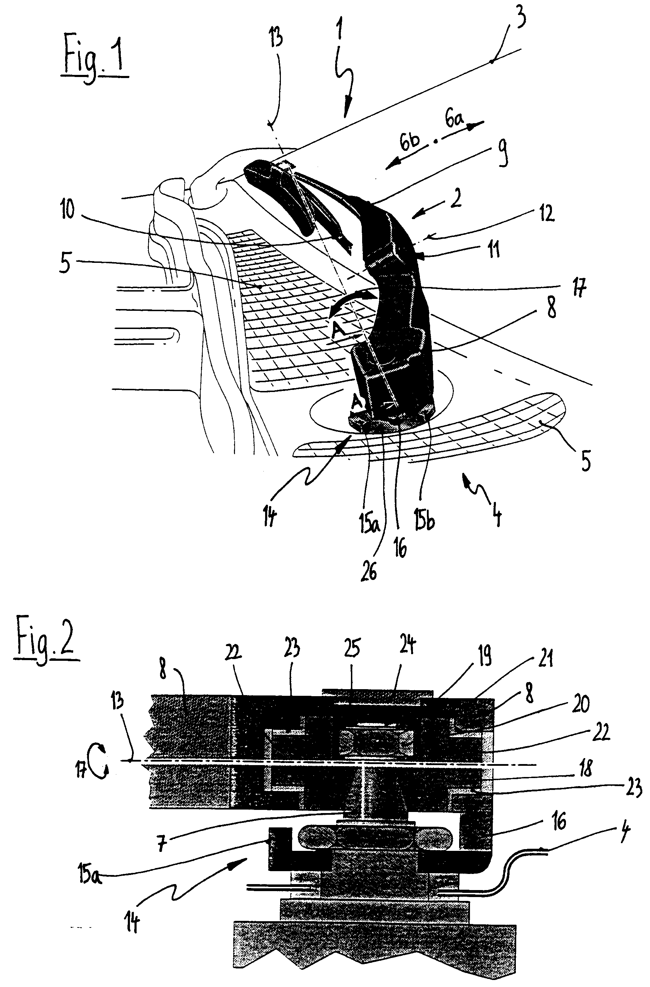

Figur 1 zeigt eine erfindungsgemäße Wischvorrichtung 1 in Form eines fahrerseitigen Scheibenwischers 2 für ein Kraftfahrzeug. Der Scheibenwischer 1 dient der Reinigung einer Windschutzscheibe 3, die sich oberhalb eines in Fahrzeugquerrichtung verlaufenden Windlaufes 4 (mit Lufteinlaßgittern 5) erstreckt. Die Aufwärtsbewegung des Scheibenwischers 1 ist mit dem Pfeil 6a, die Abwärtsbewegung mit dem Pfeil 6b dargestellt. In der Darstellung der Figur 1 befindet sich der Scheibenwischer 2 in seiner unteren Endlage.

Der Scheibenwischer 2 setzt sich im wesentlichen aus einem Befestigungsteil 8 sowie einem Wischarm 9 mit einem Wischblatt 10 zusammen. Der Wischarm 9 ist über ein Schwenklager 11 mit einer Schwenkachse 12 am Befestigungsteil 8 gelagert. Eine Wischerantriebswelle 7 (siehe Figur 2) ist drehfest an das Befestigungsteil 8 gekoppelt und überträgt ihre Pendelbewegung auf den Scheibenwischer 2.

Erfindungsgemäß ist einerseits eine Kipplagerung des Wischarms 9 um eine Kippachse 13 sowie andererseits eine Steuereinrichtung 14 zur zwangsweisen Einleitung der Kippbewegung des Wischarms 9 vorgesehen.

Der Pfeil 17 gibt die Richtung der Kippbewegung um die Kippachse 13 an. Die Kippachse 13 verläuft im wesentlichen parallel zur Längserstreckung des Wischarmes 9 bzw. des Wischblattes 10. Bevorzugt verläuft die Kippachse 13 durch die Befestigungsachse des Wischblattes 10 am Wischarm 9, um den Höhen- und Winkelversatz des Wischblattes 10 durch das Kippen möglichst gering zu halten. Die Kippwinkel betragen etwa +/- 2,5 bis 3,5°.

Die Steuereinrichtung 14 wird von Anschlägen 15a, b und einem Anschlagnocken 16 (in Figur 1 abweichend von seiner tatsächlichen unmittelbar zum Anschlag 15b benachbarten Position in einer willkürlichen Mittellage zwischen den Anschlägen 15a, b dargestellt) gebildet.

Figur 2 zeigt die erfindungsgemäße Wischvorrichtung 1 im Querschnitt. Die Wischerantriebswelle 7 ist durch den Windlauf 4 durchgeführt. Sie trägt oberseitig einen Kegelsitz 18 und einen Gewindeabschnitt 19. Ein Koppelteil 20 ist mit einer Mutter 21 gegen den Kegelsitz 18 verspannt, wodurch sich eine drehfeste Verbindung ergibt. Das Koppelteil 20 weist zwei abstehende Lagerzapfen 22 auf, die im Querschnitt kreisrund sind und konzentrisch zur Kippachse 13 verlaufen. Die Lagerzapfen 22 sind mit einer Gleitlagerbeschichtung 23 versehen. Auf die Lagerzapfen 22 ist das Befestigungsteil 8 aufgesetzt, so daß das Befestigungsteil 8 um die Kippachse 13 kippen kann. Eine Abdeckkappe 24 verschließt die Montageöffnung 25 für die Verschraubung der Mutter 21. Die Anschläge 15a, b sind auf einer Scheibe 26, die fest mit dem Windlauf 4 verbunden ist, angeordnet.

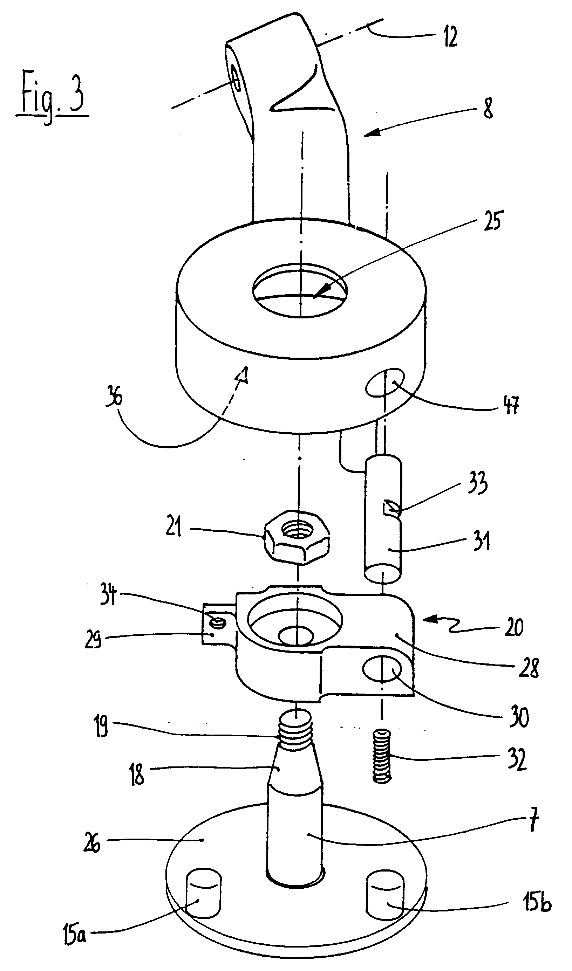

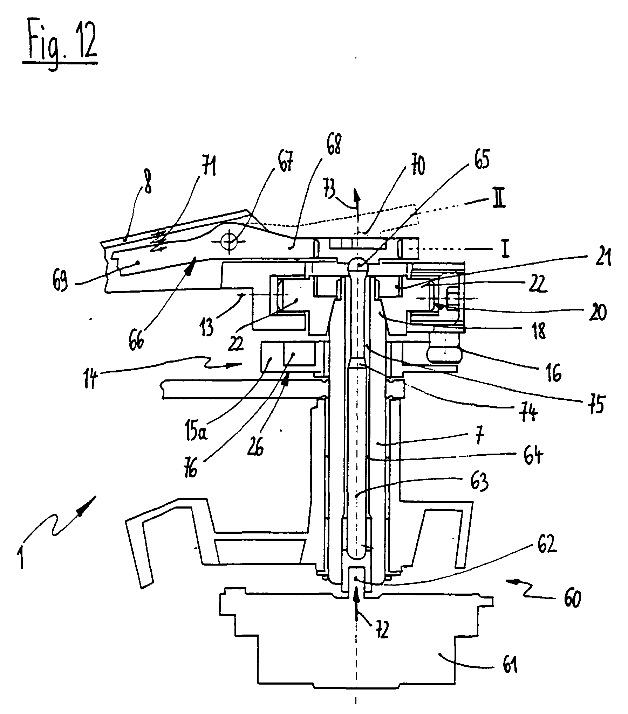

Das Funktionsprinzip der erfindungsgemäßen Wischvorrichtung 1 wird anhand eines Ausführungsbeispiels gemäß den Figuren 3 bis 6 näher erläutert. Gleiche oder gleichwirkende Teile sind dabei mit denselben Bezugszahlen wie in den Figuren 1 und 2 bezeichnet. Auf dem Kegelsitz 18 einer Wischerantriebswelle 7, die durch eine Scheibe 26 mit zwei Anschlägen 15a, b durchgeführt ist, wird ein Koppelteil 20 mittels einer Mutter 21 drehfest angeordnet. Der Mittenabschnitt 27 des Koppelteils 20 ist kreiszylinderähnlich ausgeführt und trägt zwei Fortsätze 28 und 29. Der Fortsatz 28 ist mit einer Durchgangsbohrung 30 versehen, in die ein Drehbolzen 31 eingesetzt wird. Der Drehbolzen 31 wird über eine Sicherungsschraube 32, die in eine Kerbe 33 des Bolzens 31 eingreift, verdreh- und verschiebefest gehalten. Der Fortsatz 29 trägt eine Befestigungsöffnung 34 für eine nicht dargestellte Blattfeder 35 (siehe Figuren 7 bis 9). Ein Befestigungsteil 8 mit einer der Form des Koppelteils 20 angepaßten unterseitigen Aussparung 36 wird über den Drehbolzen 31 und Lagerbohrungen 47 im Befestigungsteil 8 mit dem Koppelteil 20 verbunden. Die Verschraubung des Koppelteils 20 erfolgt über die Montageöffnung 25 im Befestigungsteil 8.

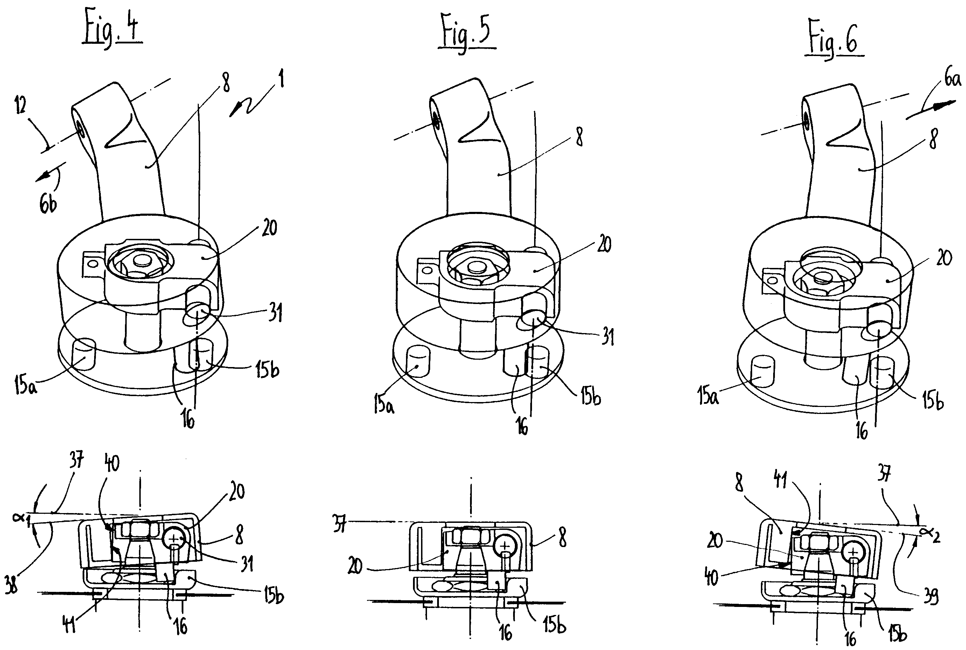

Die Figuren 4 bis 6 zeigen die erfindungsgemäße Wischvorrichtung 1 im zusammengesetzten Zustand in verschiedenen Kipplagen.

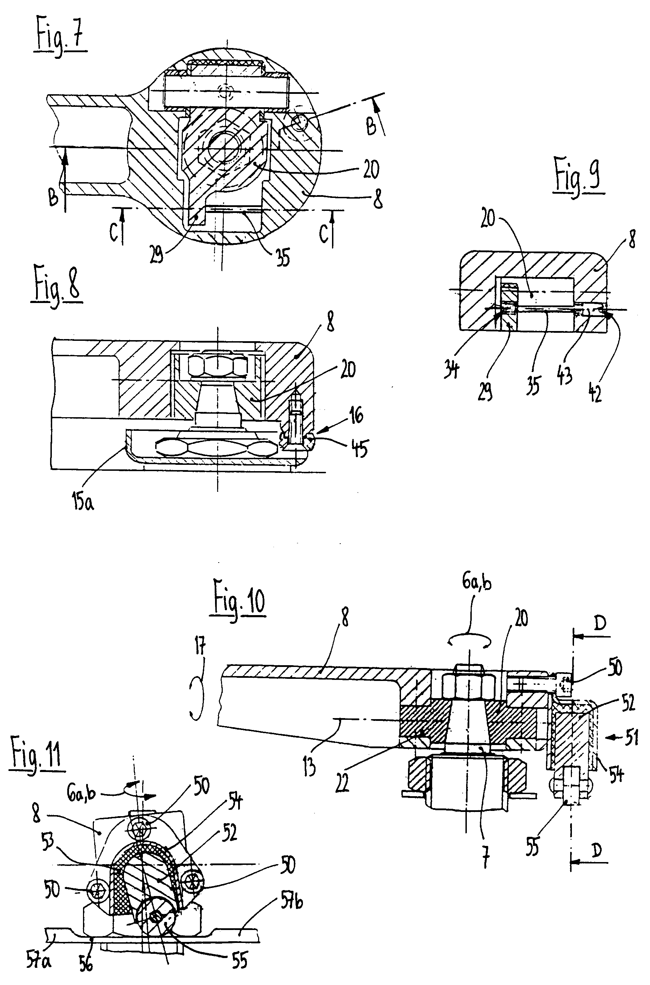

In Figur 4 ist das Befestigungsteil 8 im Bereich der unteren Endlage des Scheibenwischers dargestellt. Wie insbesondere aus der Seitenansicht der Wischvorrichtung 1 hervorgeht, ist das Befestigungsteil 8 und damit auch der nicht dargestellte Wischarm 9 und das Wischblatt 10 um den Kippwinkel a1 gegenüber einer Neutrallage 37 (siehe Figur 5) in die der Abwärtsbewegung 6b des Wischarms 9 zugeordnete Kipplage 38 gekippt. Der Anschlagnocken 16 befindet sich kurz vor dem der unteren Endlage zugeordneten Anschlag 15a.

Figur 5 stellt das Anlaufen des Anschlagnockens 16 am Anschlag 15b dar. Durch den mechanischen Anschlag wird auf die Kipplagerung um den Drehbolzen 31 ein Impuls ausgeübt, der bewirkt, daß sich das Befestigungsteil 8 aus seiner Kipplage 38 in die Neutrallage 37 aufrichtet.

Mit dem weiteren Anlaufen des Nockens 16 am Anschlag 15b wird das Befestigungsteil 8 über seine Neutrallage 37 hinaus in die gegenüberliegende Kipplage 39 überführt. Die Außenkontur 40 des Koppelteils 20 einerseits und die Innenkontur 41 der Aussparung 36 im Befestigungsteil 8 andererseits begrenzen hierbei den Kippwinkel a2 analog zur Begrenzung des Kippwinkels a1 (siehe Figur 4). In der gemäß Figur 7 dargestellten Kipplage 39 des Befestigungsteils 8 kehrt die Wischerantriebswelle 7 ihre Drehrichtung um, so daß nunmehr das Befestigungsteil 8 in Richtung des Pfeils 6a nach oben bewegt wird und hierbei die Wischlippe des Wischblattes 10 in vorteilhafter Weise über die Windschutzscheibe 3 geschleppt wird.

Die Lage der Anschläge 15a, b ist auf den Drehwinkel der Wischerantriebswelle 7 abzustimmen. Die Anschläge 15a, b sind bevorzugt so angeordnet, daß das Kippen des Wischarms 9 bereits kurz vor dem Erreichen des Umkehrpunktes des Scheibenwischers 2 eingeleitet wird. Somit ist sichergestellt, daß die Wischlippe des Wischblattes 10 auch bei einem Abschalten des Scheibenwischers 2 in ihrer Ruhestellung bereits in Schleppposition liegt und damit ein Rubbeln der Wischlippe schon beim ersten Wischvorgang unterbunden werden kann.

Die Figuren 7 bis 9 zeigen eine Variante des zweiten Ausführungsbeispiels der erfindungsgemäßen Wischvorrichtung 1, die mit einer Einrichtung in Form einer Feder 35 zur Stabilisierung der beiden Kipplagen 38 und 39 versehen ist. Wiederum sind gleiche oder gleichwirkende Teile mit denselben Bezugszahlen aus den vorangegangen Figuren bezeichnet.

Ein Befestigungsteil 8 weist eine Aussparung 42 auf, in die eine Halterung 43 für die Blattfeder 35 eingesetzt ist. Das der Halterung 43 gegenüberliegende Ende der Blattfeder 35 greift in eine Aufnahmeöffnung 34 am Fortsatz 29 des Koppelteils 20 ein. Die Blattfeder 35 ist in den Figuren 7 bis 9 in ihrer instabilen Mittellage dargestellt, die zwischen ihren beiden Übertotpunktlagen liegt, in denen sie die Kipplagen 38 bzw. 39 stabilisiert, indem sie auf das Befestigungsteil 8 eine Vorspannung ausübt. Diese Vorspannung bewirkt, daß auch unter ungünstigen Bedingungen, wie sie beispielsweise bei höheren Fahrzeuggeschwindigkeiten mit entsprechend großen Windkräften am aufwärtsbewegten fahrerseitigen Wischblatt vorliegen, die dabei auftretenden Kräfte nicht ausreichen, um ein unerwünschtes Zurückkippen des Wischarms 9 zu verursachen. Erst durch das Auflaufen des Nockens 16 an einen der Anschläge 15a, b wird die Federvorspannung gezielt überwunden.

Aus Figur 8 geht hervor, daß der Anschlagnocken 16 mit einer Ummantelung 45 aus einem elastischen Material versehen ist. Hierdurch werden die an der Steuereinrichtung 14 auftretenden Geräusche maßgeblich reduziert.

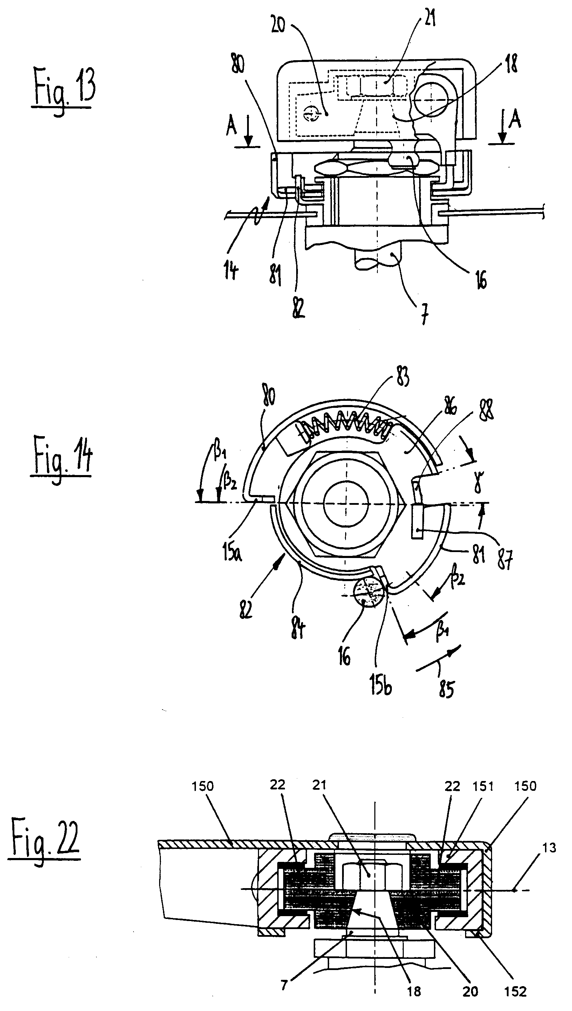

Die Figuren 10 und 11 zeigen ein weiteres Ausführungsbeispiel einer erfindungsgemäßen Wischvorrichtung 1. Ein Befestigungsteil 8 ist über Lagerzapfen 22 eines Koppelteils 20 drehfest mit einer Wischerantriebswelle 7 verbunden. Am Befestigungsteil 8 ist ein Nockenelement 51 über Schrauben 50 angeordnet. Das Nockenelement 51 besteht aus einem Anschlagnocken 52, der über eine Gummilagerung 53 in einen Nockenhalter 54 eingebunden ist. Der Nocken 52 trägt an seinem unteren Endabschnitt eine Laufrolle 55, die entlang einer Laufbahn 56 läuft. An den beiden Endabschnitten der Laufbahn 56 sind Rampen 57a, b angeordnet. Diese Rampen 57a, b übernehmen die Funktion der Anschläge 15a, b aus den vorangegangenen Ausführungsbeispielen.

Figur 12 zeigt eine Wischvorrichtung 1 mit einer Verstellvorrichtung 60 zur Veränderung der Andruckkraft eines nicht dargestellten Wischarmes. Die Wischvorrichtung 1 weist eine Wischerantriebswelle 7 auf, mit deren oberseitigem Kegelsitz 18 ein Koppelteil 20 über eine Mutter 21 fest verschraubt ist. Das Koppelteil 20 nimmt über seine Lagerzapfen 22, die eine Kippachse 13 bilden, ein Befestigungsteil 8 auf, das somit drehfest an der Wischerantriebswelle 7 angeordnet ist.

Die Verstelleinrichtung 60 besteht aus einem Antrieb 61, der mit einem Zapfen 62 auf einen Stößel 63 wirkt. Der Stößel 63 ist im Hohlraum 64 der als Hohlachse ausgeführten Wischerantriebswelle 7 untergebracht. Der obere Endabschnitt des Stößels 63 ist als Halbkugel 65 ausgebildet.

Am Befestigungsteil 8 ist zur Übertragung der Anpreßkraft auf den nicht dargestellten Wischarm ein Kipphebel 66 an einer Lagerstelle 67 angelenkt. Der Kipphebel 66 ist als zweiarmiger Hebel mit einem ersten Hebelarm 68 und einem zweiten Hebelarm 69 ausgeführt. Der erste Hebelarm 68 weist an seiner Unterseite eine Kugelpfanne 70 auf, in die der halbkugelförmige Endabschnitt 65 des Stößels 63 eingreift. Der zweite Hebelarm 69 ist mit dem nicht dargestellten Wischarm verbunden und wird über eine Zugfeder 71 in der dargestellten Ausgangslage I gehalten.

Zur Vergrößerung die Andruckkraft des Wischarmes auf der Windschutzscheibe bei höherer Fahrtgeschwindigkeit wird der Zapfen 62 in Richtung des Pfeils 72 bewegt und verschiebt somit den Stößel 63 nach oben. Mit dem Stößel 63 wird auch der Kipphebel 66 in Richtung des Pfeils 73 entgegen der Kraft der Feder 71 verschwenkt. Die Position mit erhöhter Andruckkraft ist mit II bezeichnet und in Figur 12 strichliert dargestellt. Um auch bei maximaler Verschwenkung des Schwenkhebels 66 eine ausreichende Freigängigkeit des Stößels 63 zu gewährleisten, ist der Stößel 63 mit einem Absatz 74 versehen, der im oberen Bereich des Hohlraums 64 einen vergrößerten Freiraum 75 schafft. Angesichts der geringen seitlichen Auslenkung des Stößels 63 kann der Absatz 74 entsprechend fein abgestuft werden.

Die Kippverstellung des Wischarmes erfolgt, indem das Koppelteil 20 und damit auch der Wischarm um die Kippachse 13 verdreht wird. Eine Überführung des Befestigungsteils 8 in die jeweilige Kipplage erfolgt durch eine Steuereinrichtung 14, die von einer Scheibe 26 mit einer kulissenförmigen Bahn 76 für einen Anschlagnocken 16 gebildet wird. An den Enden der Bahn 76 befinden sich Anschläge, von denen in Figur 12 nur der Anschlag 15a sichtbar ist.

Durch die Kombination der Verstelleinrichtung 60 mit der Steuereinrichtung 14 ist es möglich, auch bei veränderbarer Andruckkraft für den Wischarm ein gesichertes Kippen des Wischarmes und damit des Wischblattes in der Art und Weise zu erzeugen, daß für beide Bewegungsrichtungen des Wischarmes die Wischlippe jeweils über die Scheibe gezogen und nicht geschoben wird.

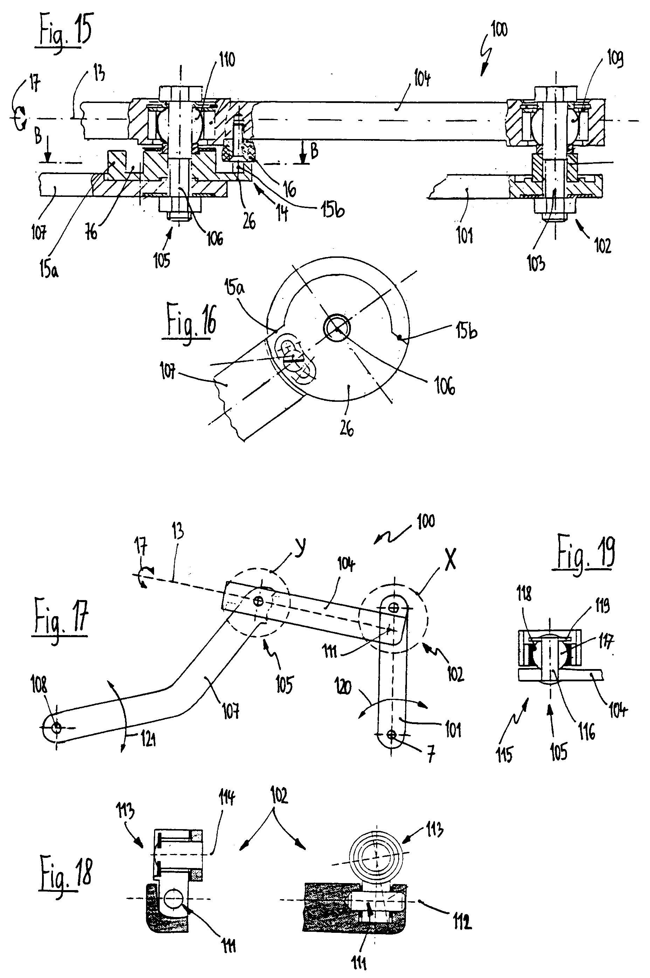

Die Figuren 13 und 14 zeigen eine weitere Wischvorrichtung 1, die von einer Antriebseinheit angetrieben wird, deren Drehwinkel veränderbar ist. Gleiche und gleichwirkende Teile sind mit denselben Bezugszahlen wie unter Figur 12 bezeichnet. Die Wischvorrichtung 1 weist eine Wischerantriebswelle 7 mit einem oberseitigen Kegelsitz 18 auf, auf den ein Koppelteil 20 mittels einer Mutter 21 drehfest angeordnet ist. Das Koppelteil 20 ermöglicht in bereits beschriebener Weise eine Verkippung des Wischarms um eine zur Längsachse des Wischarms parallele Achse.

Die Verkippung wird von einer Steuereinrichtung 14 ausgelöst. Die Steuereinrichtung 14 besteht aus drei konzentrischen Scheiben 80, 81 und 82. Die erste, feststehende Scheibe bildet einen Anschlag 15a, der beispielsweise die korrekte Kipplage für die Aufwärtsbewegung des Wischarms einleitet. An der zweiten, drehbaren Scheibe 81 befindet sich ein zweiter Anschlag 15b, an dem in der Darstellung der Figur 14 ein Anschlagnocken 16 anliegt.

Erste und zweite Scheibe 80 und 81 sind über eine Druckfeder 83 gegeneinander vorgespannt. Die dritte, feststehende Scheibe 82 übernimmt hierbei mit ihrem bogenförmigen Bereich 84 die Funktion eines Abstandshalters.

Wird durch den variierbaren Antrieb der Wischarm und damit auch der Anschlagnocken 16 über den Anschlag 15b in Richtung des Pfeils 85 hinausbewegt, so wird die Scheibe 81 und mit ihr der Scheibenabschnitt 86 (über die Mitnehmer 87 und 88) in Richtung des Pfeils 85 entgegen der Druckkraft der Feder 83 verdreht. Somit wird der Winkel $\beta1$, der dem normalen Wischfeld des Scheibenwischers entspricht, auf den Winkel $\beta2$ vergrößert. Ein nicht dargestellter Anschlag begrenzt hierbei den Winkel $\beta2$. Der Differenzwinkel $\gamma = \beta2 - \beta1$ dient dem Anfahren einer Parkstellung, in der der Scheibenwischer versenkt unterhalb der Oberkante der Fronthaube untergebracht ist.

In Figur 15 ist ein Ausschnitt aus einem Viergelenkgetriebe 100 zur Steuerung der Bewegung eines nicht dargestellten Wischarmes dargestellt. Das Viergelenkgetriebe 100 besteht aus einem Antriebshebel 101, dessen einer Endabschnitt mit der Wischerantriebswelle verbunden ist (erste Lagerstelle, nicht dargestellt). Der andere Endabschnitt des Antriebshebels 101 ist an der zweiten Lagerstelle 102, die von einem ersten Drehbolzen 103 gebildet wird, mit einem Verbindungshebel 104 verbunden. Der Verbindungshebel 104 ist über eine dritte Lagerstelle 105 (zweiter Drehbolzen 106) mit einem Steuerhebel 107 gekoppelt. Der Steuerhebel 107 ist seinerseits an einer nicht dargestellten vierten Lagerstelle an der Karosserie gelagert. Die vier Lagerstellen bilden das Viergelenkgetriebe 100, das den Wischarm in der gewünschten Weise über die Windschutzscheibe führt.

Zweite und dritte Lagerstelle 102 bzw. 105 sind mit Kugelgelenken 109 und 110 versehen. Diese Kugelgelenke 109, 110 ermöglichen eine Kippbewegung um eine Kippachse 13 entsprechend dem Pfeil 17. Die Kippachse 13 verläuft in Verlängerung bzw. parallel zur Längsachse des nicht dargestellten Wischarmes. Somit kann der Wischarm über die Kipplagerung des Verbindungshebels 104 zwischen zwei definierten Kipplagen hin- und herbewegt werden.

Die Überführung von einer Kipplage in die andere erfolgt durch eine Steuereinrichtung 14, die in bereits beschriebener Weise von einer Scheibe 26 mit einer kulissenförmigen Bahn 76 und zwei Anschlägen 15a, b gebildet wird (siehe auch Figur 16). Sobald der Anschlagnocken 16 der Steuereinrichtung 14 gegen einen der Anschläge 15a, b fährt, wird der Verbindungshebel 104 in seine jeweils andere Kipplage überführt.

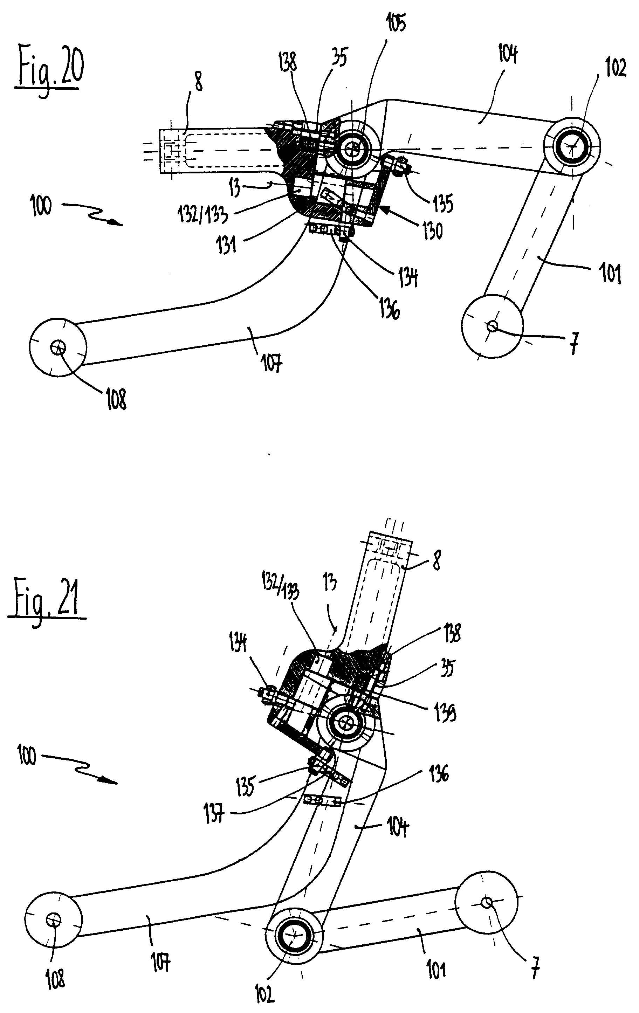

Die Figuren 17 bis 19 zeigen eine Variante des Ausführungsbeispiels der Figuren 15 und 16. Gleiche und gleichwirkende Teile sind wiederum mit denselben Bezugszahlen wie in den entsprechenden, vorangegangenen Ausführungsbeispielen bezeichnet.

Das Viergelenkgetriebe 100 gemäß Figur 17 besteht aus einem Antriebshebel 101, der drehfest mit der Wischerantriebswelle 7 verbunden ist, sowie einem Verbindungshebel 104 und einem Steuerhebel 107, der an einem karosseriefesten Lager 108 angelenkt ist. Die Verbindung des Verbindungshebels 104 mit dem Antriebshebel 101 erfolgt über ein zweigeteiltes Lager 102, das in Figur 18 näher dargestellt ist. Die Pfeile 120 und 121 geben die Bewegungsrichtungen der Hebel 101 und 107 an.

Das Lager 102 besteht aus einem ersten Drehgelenk 111 mit einer Drehachse 112. Senkrecht hierzu ist ein zweites Drehgelenk 113 mit einer Drehachse 114 angeordnet, so daß eine Beweglichkeit des Hebels 104 in zwei Raumrichtungen gegeben ist. Die Verbindung zwischen dem Hebel 104 und dem Steuerhebel 107 an der Lagerstelle 105 erfolgt über ein Kugelgelenk 115, das von einem Drehbolzen 116, einer Kugel 117 und einer Kugelpfanne 118 gebildet wird. Eine oberseitig am Drehbolzen 116 angeordnete Scheibe 119 dient der Begrenzung der Kippbewegung.

Am Verbindungshebel 104 ist in Verlängerung seiner Längsachse 13 der Wischarm angeordnet. Durch die Lagerstellen 102 und 105 kann der Verbindungshebel 104 gegenüber den Heben 101 und 107 um seine Längsachse, die Kippachse 13, verkippt werden. Der Pfeil 17 gibt die Kippbewegung an. Somit wird über den Hebel 104 auch der an ihm angeordnete Wischarm jeweils in diejenige Kipplage überführt, in der die Wischlippe in geschleppter Stellung an der Scheibe anliegt. Die Steuereinrichtung, die die Überführung in die jeweiligen Kipplagen bewirkt, ist in den Figuren 17 bis 19 nicht dargestellt. Sie entspricht jedoch im wesentlichen der Steuereinrichtung 14 aus den Figuren 15 und 16.

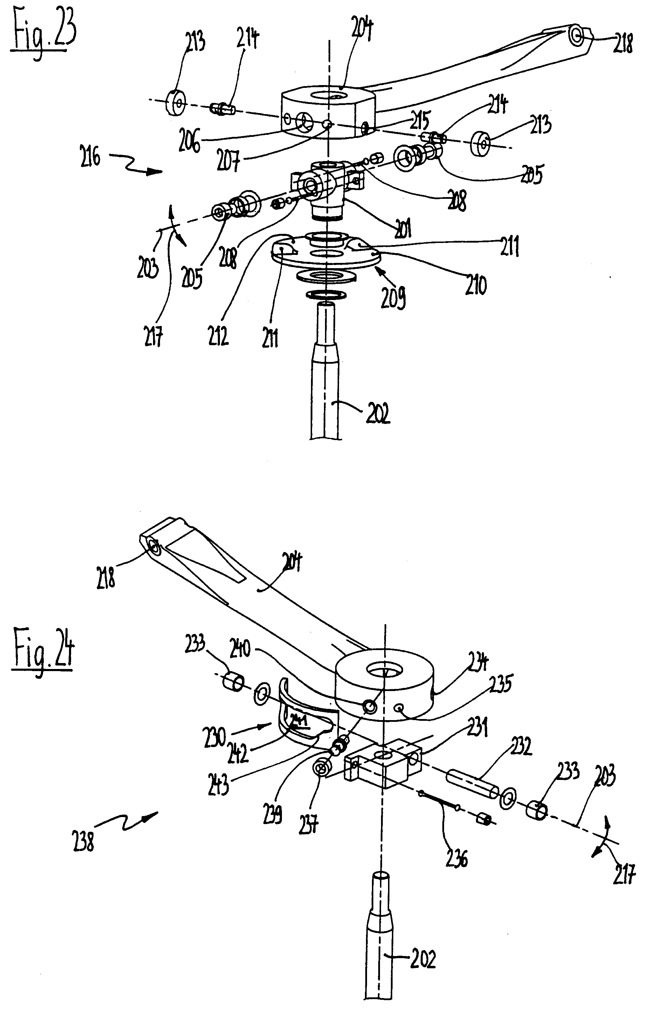

In den Figuren 20 und 21 ist eine weiteres Ausführungsbeispiel eines Vergelenkgetriebes 100 zur Steuerung der Bewegung eines Wischarms dargestellt. Das Viergelenkgetriebe 100 besteht in analoger Weise aus einem Antriebshebel 101, einem Verbindungshebel 104 und einem Koppelhebel 107, die über die Lagerstellen 7, 102, 105 und 108 mit der Karosserie des Fahrzeugs bzw. untereinander verbunden sind.

Um eine Kippbewegung des Befestigungsteils 8 und damit des Wischarms zu ermöglichen, ist das Befestigungsteil 8 über eine Kipplagerung 130 an einem Fortsatz 131 des Koppelhebels 107 gelagert. Die Kipplagerung 130 besteht aus einem Bolzen 132, der in eine entsprechende Lagerbohrung 133 am Befestigungsteil 8 eingreift und die Kippachse 13 bildet.

Die Kippbewegung wird durch zwei am Befestigungsteil 8 angeordnete Steuerrollen 134 und 135 eingeleitet, denen zwei Rampen 136 und 137 am Koppelhebel 107 zugeordnet sind. Die Rampen 136, 137 sind beispielsweise als gebogene Federblechelemente ausgeführt, wodurch Bauteiltoleranzen und Verschleiß ausgeglichen werden können. Die Kippbewegung wird durch einen Anschlag 138 begrenzt, der zur Dämpfung der Anschlagbewegung mit mehreren Ringen 139 aus Elastomerwerkstoff versehen ist. Die Anzahl und Härte der Ringe 139 kann zur Abstimmung der Dämpfung variiert werden. Eine Blattfeder 35 fixiert die beiden Kipplagen des Befestigungsteils 8.

Ausgehend von der in Figur 20 dargestellten unteren Umkehrlage (Parklage) des Befestigungsteils 8 wird das Viergelenkgetriebe 100 über den Antriebshebel 101 in die in Figur 21 dargestellte obere Umkehrlage gebracht. Kurz vor dem Erreichen der oberen Umkehrlage läuft die Steuerrolle 135 auf die Rampe 137 auf, wodurch das Befestigungsteil 8 unter Überwindung der Federkraft der Blattfeder 35 in seine entgegensetzte Kipplage verschwenkt wird. Das Auftreffen auf den Anschlag 138 wird durch die Ringe 139 gedämpft. Der Wischarm bewegt sich nun in geschleppter Stellung der Wischblätter zurück in die Parklage. Kurz vor dem Erreichen der Parklage läuft nun die Steuerrolle 134 auf die Rampe 136 auf und bringt hierdurch das Befestigungsteil 8 in seine ursprüngliche Kipplage, so daß bei der nachfolgenden Aufwärtsbewegung des Wischarms die Wischblätter wiederum in geschleppter Stellung über die Windschutzscheibe des Fahrzeugs gezogen werden.

Figur 22 zeigt eine weitere Wischvorrichtung mit einer nicht dargestellten Steuereinrichtung zur Einleitung der Kippbewegung des Befestigungsteils 150. Im Unterschied zu der in Figur 21 dargestellten Ausführungsform besteht das Befestigungsteil 150 aus Stahlblech. Zwischen Befestigungsteil 150 und Koppelteil 20 (mit Lagerzapfen 22) ist ein Lagerteil 151 eingesetzt. Somit erfolgt die Kippbewegung des Befestigungsteils 150 über eine aus Lagerteil 151 und Koppelteil 20 gebildete Lagereinrichtung (Kippachse 13). Das Befestigungsteil 150 ist über abgebogene Laschen 152, die beispielsweise in Ausnehmungen des Lagerteils 151 eingreifen, drehfest mit dem Lagerteil 151 verbunden.

Figur 23 zeigt ein weiteres Ausführungsbeispiel der Erfindung. Ein Koppelteil 201 ist drehfest mit einer Wischerantriebswelle 202 verbunden. Am Koppelteil 201 ist kippbar gelagert (Kippachse 203) ein Befestigungsteil 204 angeordnet, an das sich über eine Schwenkachse 218 ein nicht dargestellter Wischarm anschließt. Die Kippachse 203 wird von in das Koppelteil 201 eingesetzten Gewindestiften 205 gebildet, die mit Durchgangsbohrungen 206 des Befestigungsteils 204 zusammenwirken. Des weiteren sind am Befestigungsteil 204 Aufnahmeöffnungen 207 für Federn 208 vorgesehen.

Unterhalb des Koppelteils 201 ist eine scheibenförmige Laufbahn 209 angeordnet. Die Laufbahn 209 ist unterteilt in einen unteren Laufbahnabschnitt 210, der über rampenförmige Erhöhungen 211 in einen oberen Laufbahnabschnitt 212 übergeht. Die Laufbahn 209 wirkt mit zwei Laufrollen 213 zusammen. Die Laufrollen 213 sind über Achsen 214 in Öffnungen 215 des Befestigungsteils 204 eingesetzt.

Die Laufbahn 209 bildet zusammen mit den Laufrollen 213 eine Steuereinrichtung 216 zur zwangsweisen Einleitung der Kippbewegung des Befestigungsteils 24 und damit des Wischarmes. Der Pfeil 217 gibt die Richtung der Kippbewegung um die Kippachse 203 an. Bei jedem Auflaufen einer Laufrolle 213 auf die zugehörige rampenförmige Erhöhung 211 erfolgt ein Kippen des Befestigungsteils 204. Die Laufrollen 213 können die Erhöhungen 211 "überfahren" und zum Zweck einer Wischfelderweiterung weiter auf dem oberen Abschnitt 212 der Laufbahn 209 abrollen. Die Federn 208 nehmen zwei Übertotpunktlagen ein, in denen sie jeweils eine Vorspannung auf das Befestigungsteil 204 ausüben und somit die beiden definierten Kipplagen stabilisieren.

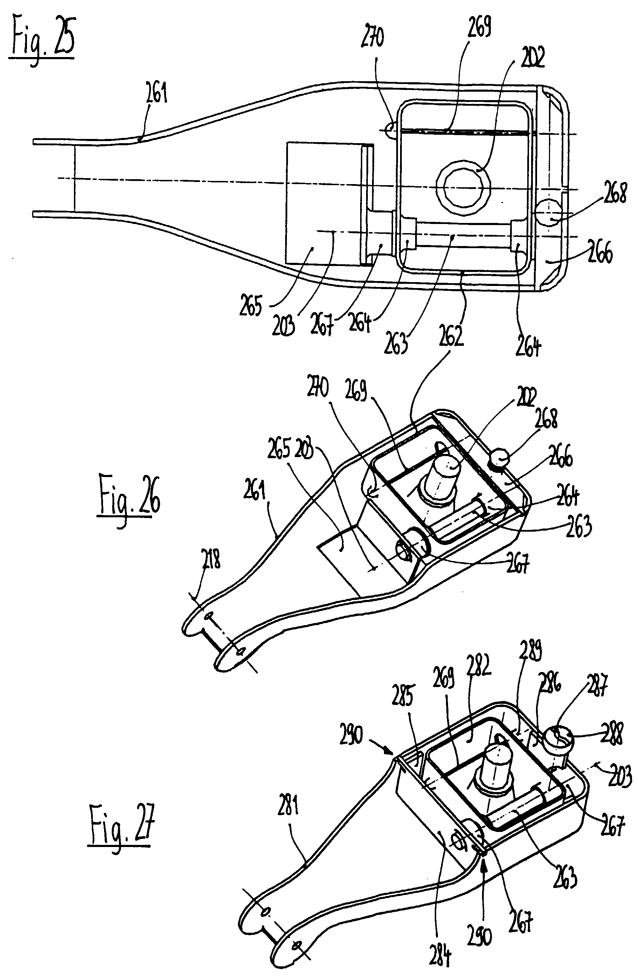

Figur 24 zeigt ein weiteres Ausführungsbeispiel der Erfindung. Gleiche oder gleichwirkende Teile sind dabei mit denselben Bezugszahlen wie in Figur 23 bezeichnet. Anstelle der Laufbahn 209 ist gemäß Figur 24 eine Kulisse 230 vorgesehen, die kreisbogenförmig um eine Wischerantriebswelle 202 angeordnet ist. Wiederum ist das Koppelteil 231 drehfest mit der Wischerantriebswelle 202 verbunden. Das Befestigungsteil 204 ist über einen Drehbolzen 232 kippbar am Koppelteil 231 gelagert (Kippachse 203). Der Drehbolzen 232 ist über Buchsen 233 in Durchgangsbohrungen 234 des Befestigungsteils 204 gelagert. Des weiteren ist in eine Aufnahmeöffnung 235 des Befestigungsteils 204 eine Feder 236 zur Stabilisierung der Kipplagen eingesetzt.

Die Kulisse 230 bildet zusammen mit einer Laufrolle 237 eine Steuereinrichtung 238 zur Einleitung der Kippbewegung des Befestigungsteils 204. Die Laufrolle 237 wird von einer Achse 239, die in eine Öffnung 240 des Befestigungsteil 204 eingesetzt ist, gelagert. Anstelle der Laufrolle 237 kann auch ein Abtaststift mit einer reibungsarmen Ummantelung vorgesehen sein.

Die Kulisse 230 weist ein Fenster 241 auf, in dem sich die Laufrolle 237 bewegt. Im Bereich des normalen Wischfeldes des Scheibenwischers rollt die Laufrolle 237 auf einem geradlinigen Abschnitt 242 der Kulisse ab. Im Bereich der Begrenzungen des Wischfeldes sind Rampen 243 vorgesehen, die ein Auflaufen der Laufrolle 237 bewirken und damit die Kippbewegung des Befestigungsteils 204 einleiten.

Die Figuren 25 und 26 zeigen die Ausführung eines Befestigungsteils 261 sowie eines Koppelteils 262 in Blechbauweise. Das Koppelteil 262 ist mit einer Wischerantriebswelle 202 drehfest verbunden. Die kippbewegliche Lagerung des Befestigungsteils 261 am Koppelteil 262 erfolgt über einen Drehbolzen 263. Dieser Drehbolzen 263 ist an den Stellen 264 über Preßpassungen drehfest mit dem Koppelteil 262 verbunden. Die Lagerung des Drehbolzens 263 am Befestigungsteil 261 erfolgt einerseits über ein Winkelblech 265 und andererseits über ein Trägerblech 266. Hierzu weisen das Winkelblech 265 und das Trägerblech 266 Durchzüge 267 (der Durchzug 267 am Trägerblech 266 ist verdeckt und somit nicht sichtbar) auf, in die Lagerbuchsen für den Drehbolzen 263 eingesetzt sind. Winkel- und Trägerblech 265 bzw. 266 sind über eine Punktschweißverbindung mit dem Befestigungsteil 261 verbunden.

Über einen weiteren Durchzug im Trägerblech 266 ist ein Anschlagnocken 268 eingesetzt. Der Anschlagnocken 268 besteht beispielsweise aus einem stiftförmigen Element, das mit einer geräusch- und verschleißmindernden Ummantelung versehen ist. Eine Feder 269 zur Stabilisierung der Kipplagen des Befestigungsteils 261 ist einerseits mit ihrem kugelförmigen Endabschnitt in einer Kugelpfanne 270 des Koppelteils 262 gelagert. Das andere Ende der Feder 269 ist am Befestigungsteil 261 festgelegt.

Anstelle eines eigenen Trägerblechs 266 kann das Befestigungsteil 261 selbst eine entsprechende Abwinkelung aufweisen, in die der Anschlagnocken 268 eingesetzt wird. Für diesen Fall ist der Durchzug 267 zur Lagerung des Drehbolzens 263 ebenfalls im Befestigungsteil 261 direkt anzubringen.

Figur 27 zeigt ein weiteres Ausführungsbeispiel eines Befestigungsteils 281 mit einem Koppelteil 282 in Blechbauweise. Wiederum sind gleiche oder gleichwirkende Teile mit den selben Bezugszahlen wie in den Figuren 25 und 26 bezeichnet.

Die Lagerung des Drehbolzens 263 erfolgt über Durchzüge 267, die in einem abgewinkelten Aufnahmeblech 284 bzw. unmittelbar am Befestigungsteil 281 angebracht sind. Das Aufnahmeblech 284 ist mit dem Befestigungsteil 281 in den Bereichen 290 verpreßt und zusätzlich an den Abwinkelungen 285 über Schweißpunkte mit dem Befestigungsteil 281 verbunden. Eine ebenfalls über Punktschweißung am Befestigungsteil 281 angebrachte Blechlasche 286 bildet einen Anschlagnocken 287 mit einer Kunststoffummantelung 288. Die Feder 269 ist in einem Durchzug 289 des Befestigungsteils 281 fixiert.

## Patentansprüche

1. Wischvorrichtung für eine Scheibe eines Fahrzeugs, mit einem Wischarm, der eine pendelnde Bewegung ausführt und wenigstens ein Wischblatt trägt, dessen Wischlippe über die Scheibe geführt wird, mit einer Lagereinrichtung, die eine Kippbewegung des Wischblattes (oder des gesamten Wischarmes) um eine im wesentlichen parallel zu seiner Längsachse verlaufende Kippachse ermöglicht, derart, daß für beide Bewegungsrichtungen des Wischarms die Wischlippe jeweils in geschleppter Stellung an der Scheibe anliegt, gekennzeichnet durch eine Steuereinrichtung (14), die jeweils im Bereich der beiden Umkehrpunkte der Pendelbewegung des Wischarms (9) ein Kippen des Wischblattes (10) (oder des gesamten Wischarmes (9)) in seine - bezogen auf die nächstfolgende Bewegungsrichtung (6a, b) des Wischarms (9) - geschleppte Stellung (38, 39) bewirkt.

**2.** Wischvorrichtung nach Anspruch 1,
dadurch gekennzeichnet, daß die Steuereinrichtung (14) von einem ersten Element mit zwei entsprechend den Umkehrpunkten der Pendelbewegung des Wischarms (9) positionierten Anschlägen (15a, b) und von einem zweiten Element in Form eines Anschlagnockens (16) gebildet wird, wobei eines der Elemente an einem mit dem Wischarm (9) mitbewegten Teil (8) und das andere Element feststehend am Fahrzeug angeordnet ist.

**3.** Wischvorrichtung nach Anspruch 1 und/oder 2,
dadurch gekennzeichnet, daß das erste Element von zwei als Vorsprüngen ausgebildeten Anschlägen (15a, b) gebildet wird.

**4.** Wischvorrichtung nach Anspruch 1 und/oder 2,
dadurch gekennzeichnet, daß das erste Element von einer kreisbogenförmigen Kulisse gebildet wird.

**5.** Wischvorrichtung nach Anspruch 1 und/oder 2,
dadurch gekennzeichnet, daß das erste Element von einer kreisbogenförmigen Laufbahn (56) mit als rampenförmigen Erhöhungen (57a, b) ausgeführten Anschlägen gebildet wird.

**6.** Wischvorrichtung nach Anspruch 5,
dadurch gekennzeichnet, daß der Anschlagnocken (52) mit einer Laufrolle (55) versehen ist.

**7.** Wischvorrichtung nach einem der vorgenannten Ansprüche,
dadurch gekennzeichnet, daß der Wischarm (9) - gegebenenfalls unter Zwischenschaltung eines Befestigungsteils (8) - an einem drehfest mit einer Wischerantriebswelle (7) verbundenen Koppelteil (20) angeordnet ist, wobei das Koppelteil (20) einerseits und der Wischarm (9) bzw. das Befestigungsteil (8) andererseits die Lagereinrichtung bilden.

**8.** Wischvorrichtung nach Anspruch 7,
dadurch gekennzeichnet, daß das Koppelteil (20) wenigstens einen Lagerzapfen (22) für den Wischarm (9) bzw. das Befestigungsteil (8) aufweist, dessen Drehachse (13) im wesentlichen parallel zur Längsachse des Wischarms (9) verläuft.

**9.** Wischvorrichtung nach Anspruch 7,
dadurch gekennzeichnet, daß Koppelteil (20) und Wischarm (9) bzw. Befestigungsteil (8) über einen im wesentlichen parallel zur Längsachse des Wischarms (9) angeordneten Drehbolzen (31) miteinander verbunden sind.

**10.** Wischvorrichtung nach einem der vorgenannten Ansprüche,
dadurch gekennzeichnet, daß der Wischarm (9) bzw. das Befestigungsteil (8) eine unterseitige Aussparung (36) zur Aufnahme des Koppelteils (20) aufweist.

**11.** Wischvorrichtung nach Anspruch 10,
dadurch gekennzeichnet, daß im zusammengestezten Zustand des Wischvorrichtung (1) zwischen Koppelteil (20) einerseits und der Aussparung (36) andererseits ein Freiraum (44) besteht, der die Kippbewegung des Wischarms (9) bzw. des Befestigungsteils (8) ermöglicht, wobei die Kippbewegung durch die Formgestaltung von Koppelteil (20) und Aussparung (36) begrenzt wird.

**12.** Wischvorrichtung nach einem der vorgenannten Ansprüche,
dadurch gekennzeichnet, daß eine Stabilisierungseinrichtung vorgesehen ist, die zwischen dem Koppelteil (20) und dem Wischarm (9) bzw. dem Befestigungsteil (8) angeordnet ist und lediglich zwei vorgegebene Lagen einnehmen kann, in denen sie jeweils eine Vorspannung auf den Wischarm (9) bzw. das Befestigungsteil (8) ausübt.

**13.** Wischvorrichtung nach Anspruch 12,
dadurch gekennzeichnet, daß die Stabilisierungseinrichtung eine stab- oder blattförmige Feder (35) mit zwei Übertotpunktlagen aufweist.

**14.** Wischvorrichtung nach einem der vorgenannten Ansprüche,
dadurch gekennzeichnet, daß eine Einrichtung zur Verstellung der Andruckkraft (60) des Wischarms an die Scheibe vorgesehen ist.

**15.** Wischvorrichtung nach Anspruch 14,
gekennzeichnet durch eine Wischerantriebswelle (7), die von einer Hohlwelle gebildet wird, durch deren Inneres (64) ein Stößel (63) zur Verstellung des Wischarms senkrecht zur Scheibe durchgeführt ist.

**16.** Wischvorrichtung nach einem der vorgenannten Ansprüche,
dadurch gekennzeichnet, daß eine Einrichtung zur Veränderung des vom Wischarm überstrichenen Bereichs auf der Scheibe vorgesehen ist.

**17.** Wischvorrichtung nach Anspruch 16,
dadurch gekennzeichnet, daß die Einrichtung von einer Antriebseinheit gebildet wird, die die Wischerantriebswelle (7) mit veränderbaren Winkelausschlägen ($\beta 1, \beta 2$) verdreht.

**18.** Wischvorrichtung nach Anspruch 16 und/oder 17,
dadurch gekennzeichnet, daß die Steuereinrichtung (14) Anschläge (15a, b) aufweist, die entsprechend dem Winkel ($\beta 1$) der Pendelbewegung des Wischarms im Normalbetrieb positioniert sind, wobei zumindest einer der Anschläge (15b) von der Antriebseinheit durch Vergrößerung ihres Winkelausschlags (γ) gegenüber den Normalbetrieb verschiebbar ist.

19. Wischvorrichtung nach Anspruch 18, dadurch gekennzeichnet, daß die Anschläge (15a, b) auf zwei konzentrischen Scheiben (80, 81) angeordnet sind, wobei die erste Scheibe (80) feststehend und die zweite Scheibe gegen die Kraft einer Feder (83) gegenüber der ersten Scheibe (80) verdrehbar ist.

20. Wischvorrichtung nach einem der vorgenannten Ansprüche, dadurch gekennzeichnet, daß die Wischvorrichtung (1) ein Viergelenkgetriebe (100) zur Erzeugung der Pendelbewegung des Wischarms aufweist, mit einem mit einer Antriebswelle (7) verbundenen Antriebshebel (101), einem drehbar an der Karosserie des Fahrzeugs angeordneten Steuerhebel (107) sowie einen Verbindungshebel (104), der Antriebs- und Steuerhebel (101 bzw. 107) miteinander verbindet und parallel zur Längsachse des Wischarms verläuft.

21. Wischvorrichtung nach Anspruch 20, dadurch gekennzeichnet, daß der Verbindungshebel (104) über jeweils ein Kugelgelenk (109, 110) mit dem Antriebs- und dem Steuerhebel (101 bzw. 107) verbunden ist, wobei die Kugelgelenke (109, 110) eine Kippbewegung des Verbindungshebels (104) um eine im wesentlichen zur Achse des Wischarms parallele Kippachse (13) ermöglichen.

22. Wischvorrichtung nach Anspruch 20 und/oder 21, dadurch gekennzeichnet, daß die Steuereinrichtung (14) im Bereich einer der beiden Kugelgelenke (110) angeordnet ist.

23. Wischvorrichtung nach Anspruch 22, dadurch gekennzeichnet, daß die Steuereinrichtung (14) von zwei karosseriefest angeordneten Anschlägen (15a, b) gebildet wird, die mit einem am Verbindungshebel (104) angeordneten Anschlagnocken (16) zusammenwirken.

24. Wischvorrichtung nach Anspruch 23, dadurch gekennzeichnet, daß anstelle wenigstens eines Kugelgelenkes (109) zwei Drehgelenke (111, 113) mit senkrecht zueinander angeordneten Drehachsen (112, 114) vorgesehen sind.

25. Wischvorrichtung nach einem der vorgenannten Ansprüche, mit einem drehfest mit einer Wischerantriebswelle verbundenen Koppelteil und einem Befestigungsteil für den Wischarm, dadurch gekennzeichnet, daß das Befestigungsteil (150) als Blechbauteil ausgeführt ist, das form- und/oder kraftschlüssig mit einem Lagerteil (151) verbunden ist, das zusammen mit dem Koppelteil (20) die Lagereinrichtung bildet.

26. Wischvorrichtung nach Anspruch 5, dadurch gekennzeichnet, daß sich an wenigstens eine der rampenförmigen Erhöhungen (211) einer weitere Laufbahn (212) anschließt.

27. Wischvorrichtung nach Anspruch 26, dadurch gekennzeichnet, daß die Steuereinrichtung (216) zwei als Laufrollen (213) ausgebildete Anschlagnocken umfaßt.

28. Wischvorrichtung nach Anspruch 4, dadurch gekennzeichnet, daß die Kulisse (230) eine Aussparung (241) aufweist, durch die eine Steuerfläche gebildet wird, entlang der eine Laufrolle (237), ein Abtaststift oder dergleichen bewegbar ist, mit einem geradlinigen Abschnitt (242), der von zwei rampenförmigen Erhöhungen (243) begrenzt wird.

29. Wischvorrichtung nach Anspruch 28, dadurch gekennzeichnet, daß sich an wenigstens eine der rampenförmigen Erhöhungen ein weiterer geradliniger Abschnitt anschließt.

30. Wischvorrichtung nach einem der vorgenannten Ansprüche, wobei der Wischarm - gegebenenfalls unter Zwischenschaltung eines Befestigungsteils - kippbar an einem drehfest mit einer Wischerantriebswelle verbundenen Koppelteil angeordnet ist, dadurch gekennzeichnet, daß das Koppelteil (262, 282) als Blechbauteil ausgeführt ist.

31. Wischvorrichtung nach einem der vorgenannten Ansprüche, dadurch gekennzeichnet, daß das Befestigungsteil (281) als Blechbauteil ausgeführt ist und am Befestigungsteil (281) eine Blechlasche (286) mit einem kunststoffummantelten Fortsatz (287/288) vorgesehen ist, der den Anschlagnocken bildet.

32. Wischvorrichtung nach einem der vorgenannten Ansprüche, dadurch gekennzeichnet, daß das Befestigungsteil (261, 281) als Blechbauteil ausgeführt ist und wenigstens einen topfförmigen Durchzug (267) aufweist, in den ein Drehbolzen (263) zur Verbindung von Befestigungsteil (261, 281) und Koppelteil (262, 282) eingesetzt ist.

Fig.1

Fig.2

Fig. 3

EP 0 806 330 A2

Fig. 4

Fig. 5

Fig. 6

Fig. 7

Fig. 9

Fig. 8

Fig. 10

Fig. 11

# Fig. 12

Fig. 13

Fig. 14

Fig. 22

Fig. 15

Fig. 16

Fig. 17

Fig. 18

Fig. 19

Fig. 20

Fig. 21

Fig.23

Fig.24

Fig. 25

Fig. 26

Fig. 27